# EUROPEAN PATENT SPECIFICATION

(11) **EP 2 900 721 B1**
(45) Date of publication and mention of the grant of the patent: **14.08.2019**
(21) Application number: 13770879.8
(22) Date of filing: 25.09.2013
(51) Int. Cl.: C08G 18/60, C08J 3/09, C08G 18/66, C08G 18/75, C08G 63/48, C08G 18/08, C08G 18/10, C08G 18/22, C08G 18/32, C08G 18/42, C08G 18/46

(54) **URETHANE ALKYD COMPRISING STRONG ACIDIC GROUPS**
URETHANALKYD MIT STARKEN SÄUREGRUPPEN
ALKYD D'URETHANE CONTENANT DES GROUPES ACIDIQUES FORTS

(30) Priority: 25.09.2012 EP 12185917
(43) Date of publication of application: 05.08.2015
(73) Proprietor: DSM IP Assets B.V., 6411 TE Heerlen (NL)
(72) Inventor: HENDRIKS, Johannes Wilhelmus Maria, NL-6100 AA Echt (NL); HOFLAND, Adriaan, NL-6100 AA Echt (NL); TICHELAAR, Michel Poul, NL-6100 AA Echt (NL); TUIJTELAARS, Bas, NL-6100 AA Echt (NL); VEURINK, Amyke, NL-6100 AA Echt (NL); DE VRIES, Bauke, NL-6100 AA Echt (NL)
(74) Representative: DSM Intellectual Property
(86) International application number: PCT/EP2013/069947
(87) International publication number: WO 2014/048978

(56) References cited:
- JP-A- 2008 007 717
- US-A- 4 201 824
- US-A1- 2008 081 870

## Description

The present invention relates to the field of resins for coating compositions in decorative, flooring or protective applications such as paints, especially to water-dispersible, air-drying uralkyd resins comprising certain fatty acid modified polyester polyols and aqueous dispersions thereof as well as methods for making and using such resins and compositions containing them.

Uralkyd resins are polyurethanes formed from reactants comprising a polyisocyanate (normally a diisocyanate) - which forms the urethane or 'ur' part - and a polyol that contains an unsaturated fatty acid residue - which forms the alkyd part. Dispersions of uralkyd resins may also be referred to herein as alkyd-based polyurethane dispersions or alkyd-PUDs. Uralkyds comprise unsaturated groups that impart latent crosslinkability so that when a coating composition of uralkyd is dried in the air (often in conjunction with a drier salt) the resultant film coating undergoes crosslinking, thereby improving its properties, e.g. chemical resistance, hardness and/or durability.

Although in general alkyd resins may be either unsaturated or saturated as used herein the terms 'alkyd' and 'alkyd resin' are used to denote air drying alkyds comprising one or more unsaturated group(s) i.e. refer to a polyester (PE) resin (or PE part of a resin such as part of an uralkyd) that comprises one or more unsaturated fatty acid moieties which are autoxidisable in air under standard conditions.

Air-drying uralkyds have a high gloss and a good resistance to water, chemicals, solvents and abrasion. They are commonly used in coating compositions such as decorative and protective surface coatings, especially for wooden substrates (e.g. flooring or other wooden surfaces subject to wear).

Traditional solvent based alkyd paints for professional and do-it-yourself applications are subject to increasing technical and ecological restrictions. For example it is desirable to reduce emissions of volatile organic compounds (VOC) to protect the environment and the (professional) painter. It is also desirable to provide uralkyds which are compliant with the latest environmental regulations so products (such as paints and/or binders) containing such uralkyds are considered to be "eco-products' and/or do not require to be labelled as potentially harmful or toxic (e.g. with skull and cross bones and/or similar label) this is also referred to herein by the short hand terms "label-free" or" Xi-free".

Prior art alkyd resins are typically obtained from a polycondensation of fatty acids or vegetable oils (30 to 70% by weight), polyols such as glycerol (10 to 40% by weight) and polyacids such as phthalic anhydride (10 to 40% by weight). These known alkyd resins have a broad molecular weight distribution, branched structure, contain residual hydroxyl and carboxyl groups for wetting properties and are capable of autoxidative drying. Due to auto-oxidation, known alkyd resins typically discolour in the dark and turn yellow.

To prepare stable aqueous dispersions of uralkyds, both the more hydrophobic polyester (alkyd) part and the less hydrophobic polyurethane (PU) part of the uralkyd must be dispersed in water. This can be achieved in part by surfactants and in part by incorporating suitable groups such as ionic or non-ionic hydrophilic groups in the polyurethane either pendant to the polymer chain or in-chain. Such groups include anions such as carboxylic, sulfonic, sulf(on)ate or phosph(on)ate groups and are typically incorporated into the PU by reacting compounds containing reactive hydrogen and at least one suitable acid group (typically a carboxylic acid) with polyisocyanate to form the PU component of the uralkyd. It is undesirable that large amounts of acidic materials remain in the resultant dispersion thus a substantial part (if not all) of the acid present must be neutralised or blocked in the final product. It is also desirable to reduce or eliminate the use of surfactants in uralkyd dispersions as a large amount of surfactant increases the water sensitivity and impairs the hardness development of the coatings that are formed from the dispersed uralkyd.

When simple inorganic bases (such as LiOH, NaOH, KOH or the like) are added to an anionic PUD to neutralise the acid groups thereon, they are found unsatisfactory. These simple bases form hydrophilic moieties in the PUD that do not evaporate rapidly when a coating film is formed and thus substantially remain in resultant coatings (whether the PU is modified or not), which are thus highly water sensitive (compared to PUD neutralised by other agents). To improve water resistance of these coatings to acceptable levels a further agent must be added to cross-link the PU. This is disadvantageous as a separate crosslinking step increases cost and potentially unreacted crosslinking agent increases the amount of VOC.

For these reasons neutralising agents other than simple inorganic bases are preferred to prepare commercially available PUDs, the most common of which are volatile amines such as the tertiary amine triethyl amine (TEA). These materials are readily available and easily removed from the final dispersion. However it is known that volatile amines also have various disadvantages. For example they readily evaporate as VOC during film formation causing unacceptable environmental pollution and/or poor indoor air quality when used indoors. The use of such materials may be more strictly regulated in the future. Furthermore amines can form complexes with cobalt which impairs the drying process and they can be a substantial cause of yellowing in the dark.

Therefore it is desirable to find an alternative method of providing stable aqueous uralkyd dispersions that produces coatings which have improved resistance to water and also a low VOC content.

It had been thought that the use of non-volatile basic salts to neutralise PUD acid moieties to prepare or stabilise uralkyds would be undesirable as this would produce coatings that are susceptible to water and/or form unstable dispersions, even at low concentration of base. This was believed to be especially the case where the salt was a strong base (e.g. pKb < 3) such as certain salts of alkali metals.

Therefore it is particularly surprising that applicant has found that stable uralkyd dispersions can be prepared using certain basic salts and yet such dispersions can produce coatings with a low VOC content that still have a good water resistance. Basic salts such as alkali metal salts and/or those salts with pKb less than 3, have even more unexpectedly found to be particularly advantageous.

A preferred object of the invention provides uralkyds with low amounts of VOC (more preferably are substantially free of VOC) and/or which are Xi-free.

A further useful object of the present invention is to provide uralkyds that exhibit similar water resistance compared to conventional similar uralkyds neutralised with amines such as TEA.

A further optional object of the present invention is to provide uralkyds that exhibit a lower degree of yellowing compared to conventional similar uralkyds neutralised with amines such as TEA.

A further useful object of the present invention is to provide uralkyds that surprisingly exhibit an improved blocking resistance compared to conventional similar uralkyds neutralised with amines such as TEA.

It is a yet further object of the invention to solve some or all of the problems identified herein either alone or in any combination.

Various alternatives have been proposed to improve the stability of PUDs whether as part of an uralkyd or other system.

A solvent assisted dispersion (SAD) process has been described to prepare alkyds and this SAD process that typically comprises the following steps. Firstly an alkyd intermediate is mixed into a suitable solvent such as acetone. Secondly the solvated intermediate from the previous step is reacted with a di-functional isocyanate and dimethylol propionic acid (also referred to herein as DMPA) to introduce carboxylic acid functionalities in the polymer backbone. This step is optionally catalysed by an amine such as tri ethyl amine (also referred to herein as TEA). In an optional next step of the SAD process a second intermediate resin may be introduced into the reaction vessel and reacted with the pre-polymer product obtained from the previous two steps. At this stage any carboxylic acid groups present in the product are neutralised if not already done so by the optional amine catalyst in step two. Water is then added to the resin to form a dispersion after which the organic solvents are removed from the dispersion under reduced pressure at slightly elevated temperatures.

WO 2008-086977 (DSM) and EP0989145 (Bayer) each disclose processes for the preparation of fatty acid modified polyurethane dispersions by employing dimethylol propionic acid (DMPA) neutralized with volatile amines to provide stabilization in water. DMPA is coupled to the alkyd by urethanisation in a non-protic solvent in the SAD process (see above). Due to the relatively weak character of the carboxylic acid groups derived from DMPA a relatively large amount of amine (e.g. triethyl amine or N-ethyldiisopropyl amine) is needed in these SAD processes. This results in a product having unneeded amounts of VOC and an increased tendency to yellow.

Polymers containing SSIPA and/or urethanes are described in the following documents.

Various polyesters and alkyds have also been prepared using certain strong sulfonated acids such as 5-(sodiosulfo)isophthalic acid (also referred to herein as 'SSIPA'. However the SSIPA is used in small amounts for the reasons given herein.

JP1994(06)-287441 (Toyobo) describes a thermoplastic polyurethane resin composition useful as a binder for magnetic recording media. The polyurethanes are prepared by reacting isocyanates and a polyester prepared using SSIPA. The polyurethane is dispersed using a SAD process. Although metal acid salts of fatty acid are used to prepare these polymers, the polyesters described do not contain unsaturated fatty acid groups and are not alkyds. The polyurethanes described are thus not uralkyds.

JP2008-007717 (Toyobo) describes a process for incorporating SSIPA in an alkyd. The alkyd is the reacted in a SAD process to form a polyurethane resin that is used with urea-formaldehyde resins in baking applications. These resins are not used to form coatings. The process is catalysed by aluminium, phosphorus alkali metal and/or alkaline-earth metal compounds. The use of such catalysts is unnecessary in the present invention.

US5530059 (Eastman) described alkyds prepared using a SSIPA neutralising agent and dispersed directly. The patent does not mention that these alkyds may undergo an urethanisation reaction and or the use of the SAD process to form an alkyd-PUD.

US6734251 (Eastman) and WO1995-02019 (DSM) each describe a process in which SSIPA is incorporated in an emulsion of an alkyd resin. Each patent employs a (different) multi-step process to overcome the incompatibility of the very polar SSIPA with the non-polar fatty acids. Thus the viscosity, molecular weight and Tg of products that may be made by these processes are limited. The hardness development and scratch resistance of these alkyd resins are inferior to those values typical for fatty acid modified PUDs prepared using more conventional methods without SSIPA. Eastman also teaches that the alkyds may be crosslinking with isocyanates for use in a 2K system. This is different from uralkyds of the invention which are dispersed after urethanisation to form a 1K system

US7968641 (Valspar) describes the preparation of a PUD using three monomer types. An uralkyd dispersion which is stabilized using SSIPA is prepared with the help of vinyl monomer in a monomer assisted dispersion (MAD) process. After emulsification the monomers are polymerised in a radical polymerisation to obtain an alkyd-acrylic hybrid polymer which dries rapidly at room temperature. It is known that the presence of fatty acid chains (excellent radical scavengers) will lower the degree of monomer conversion unacceptably which inevitably results in a high amount of residual monomer in the final product. To reduce the VOC content thus requires either a drastic post initiation step and/or removal of monomer which adds to the complexity and cost of this process. This document does not describe uralkyds made by a SAD process

US2008-0026128 (TDK) describes polyesters prepared using SSIPA that are reacted with isocyanates and with radiation curable acrylic monomers. The resins are dispersed via the SAD process and are used to make magnetic recording devices. The polyesters described do not contain unsaturated fatty acid groups and are not alkyds.

WO1998-06768 (Fuller) describes a sulfonated polyurethane-vinyl polymer, which may be prepared by a MAD process in which a polyester or a covalently bonded acrylic is formed via a urethane intermediate. Fatty acid groups are not described and there is no suggestion that the polyester component may be an alkyd.

WO1997-19120 (Akzo Nobel) describes polyurethane dispersions that are stabilised using ionic groups and pendant polyoxyalkylene groups. It is known that the use of polyoxyalkylene groups will lead to softening and a decreased blocking resistance. The polyurethane dispersions of the present invention do not require use polyoxyalkylene groups.

Surprising the applicant has found a method of stabilising dispersions of uralkyds using acids, partially or fully, neutralized with non-volatile bases, such as alkali metal salts (such as SSIPA) and/or salts without the disadvantages of prior art methods. Useful dispersions obtained by the method of the invention comprise fatty acid modified polyurethane dispersions having excellent stability, non-yellowing properties, low (preferably no) residual monomer content, and produce coatings with excellent drying properties, good scratch resistance. Surprisingly good water resistance and/or surprisingly good blocking resistance.

Therefore broadly in accordance with the invention there is provided a solvent assisted dispersion (SAD) process for preparing an aqueous polycondensate dispersion substantially free of solvents, the process comprising the step of:
(a) reacting in the presence of a non-protic solvent a mixture of
   (i) one or more polycondensate monomers, polycondensate oligomers and/or polycondensate polymers comprising a plurality of isocyanate-reactive groups; wherein (optionally) the monomers, oligomers and/or polymers comprises at least 2% by weight (of total components (a)(i) and (a) (ii)) of a fully, partially or non-neutralized acid group having a pKa less than 3 (strong acid component);
   (ii) at least one multifunctional isocyanate,
   to form a mixture of a first polycondensate resin and the non-protic solvent;
(b) optionally, reacting the first polycondensate from step (a) (also denoted herein as emulsifier polymer) with at least one monomer, oligomer and/or polymer different from component (a) (component (b) also denoted herein as performance polymer) to form a second polycondensate resin;
(c) dispersing the first polycondensate resin from step (a) and/or the second polycondensate resin from step (b) in an aqueous medium to form an aqueous polycondensate dispersion.
(d) removing substantially all of the non-protic solvent from the said dispersion to form a polycondensate dispersion substantially-free of solvent
   and where the acid groups are completely or partially neutralized in step (a), in step (b) and/or before dispersing the polycondensate in water.
Preferably in embodiments of the present invention, the process of the present invention and/or the dispersions and/or resins prepared by the process of the invention may be substantially free of materials comprising polyalkylene groups and/or are substantially free of catalysts comprising aluminium, phosphorus alkali metal and/or alkaline-earth metal compounds.

Broadly in a preferred and/or alternative embodiment and/or aspect of the present invention there is provided suitable (optionally further) strong acid monomers, oligomers and/or polymers (more preferably polycondensate monomers, polycondensate oligomers and/or polycondensate polymers) that may be used in and/or added to the mixture(s) of step (a) and/or (b) in an amount of least 2% by weight (of total components (a) to (b)) having thereon a fully, partially or non-neutralized acid group having a pKa less than 3 (also referred to herein as a strong acid component) and such strong acid components may be used in and/or after step (b) (in which case the strong acid components in step (a)(i) are optional as they may not be needed). Where there are no strong acid components used in step (a)(i) then strong acid components are added in and/or after step (b).

Preferably the polycondensate is a polyamide and/or a polyester, more preferably polyester, most preferably alkyd.

Broadly in accordance with a preferred embodiment of the invention there is provided a process for preparing an aqueous polyester (e.g. uralkyd) dispersion substantially free of solvents, the process comprising the step of:
(a) reacting in the presence of a non-protic solvent a mixture of
   (i) one or more polyester monomers, polyester oligomers and/or polyester polymers (e.g. alkyds and/or non-alkyd polyesters) polymers comprising a plurality of isocyanate-reactive groups (e.g. active hydrogen containing groups); wherein the polyester monomers, polyester oligomers and/or polyester polymers comprises at least 2% by weight (components) of a fully, partially or non-neutralized acid group having a pKa less than 3.
   (ii) at least one multifunctional isocyanate, to form a mixture of a first isocyanate functional polyester resin (also denoted herein as emulsifier polyester) and the non-protic solvent; (e.g. where the polyester comprises an alkyd the polyester resin comprises a uralkyd resin)
(b) optionally, reacting the first isocyanate functional polyester from step (a) (emulsifier polyester) with at least one monomer, oligomer and/or polymer different from component (a) to form a second polyester resin; (the different component used in step (b) and/or the second polyester resin may also be denoted herein as performance component or where appropriate performance polymer)
(c) dispersing the first isocyanate functional polyester resin (emulsifier polyester) from step (a) and/or the second polyester resin (performance polyester) from step (b) in an aqueous medium to form an aqueous polyester dispersion.
(d) removing substantially all of the non-protic solvent from the dispersion from step (c) to form polyester dispersion substantially-free of solvent.
where the acid groups are completely or partially neutralized, in step (a), in step (b) and/or before dispersing the polyester in water.

Optionally the polycondensate (e.g. polyester) dispersions of the invention can be chain-extended by using chain extenders known to those skilled in the art.

Preferred first and/or second polycondensates (such as polyesters, e.g. uralkyds) of the invention have a polydispersity (or PDi defined as Mw/Mn) of greater than 5, more preferably greater than 7. Conveniently the first and/or second polycondensates (such as polyesters e.g. uralkyds) of the invention have substantially the same, preferably the same PDi.

Preferred first and/or second polycondensates (such as polyesters, e.g. uralkyds) of the invention have a number average molecular weight (or Mn as calculated as described herein) of from 1,000 to 1,000,000 daltons, more preferably from 5,000 to 500,000 daltons, most preferably from 10,000 to 200,000 daltons, Conveniently the first and second polycondensates (such as polyesters, e.g. uralkyds) of the invention have substantially the same, preferably the same Mn.

Preferred first and/or second polycondensates (such as polyesters, e.g. uralkyds) of the invention have a weight average molecular weight (or Mw as measured as described herein) of from 1,000 to 1,000,000 daltons, more preferably from 5,000 to 500,000 daltons, most preferably from 10,000 to 200,000 daltons, Conveniently the first and second polycondensates (such as polyesters, e.g. uralkyds) of the invention have substantially the same, preferably the same Mw.

Preferred polycondensates (such as polyesters, e.g. uralkyds) of the invention are obtained and/or obtainable from materials comprising two or more suitable functional groups, more preferably three or more suitable functional groups, even more preferably four or more suitable functional groups, most preferably having four suitable functional groups, where such suitable functional groups may usefully be selected from hydroxyl and/or carboxy group(s). An example of a suitable functional material is pentaerytritol.

Usefully the polycondensates (such as polyesters, e.g. uralkyd) compositions of the invention are substantially free of VOC (i.e. low VOC), have good water resistance (as measured herein) and/or have good blocking resistance (as measured herein).

In a further embodiment of the process of the invention comprises the steps of
1) reacting a sulfo salt of a suitable component selected from one or more acid, alcohol, amine, acid derivative thereof and/or mixtures thereof with an excess of a suitable polyfunctional compound reactive with the sulfo salt to form a multi-functional ester, conveniently a diester;
2) reacting the multi-functional ester (conveniently a diester) from step (2) with a second polyfunctional reactive compound (which may be the same or different from that used in step (1) and if the same is used in additional amounts from step (1)) and optionally monoacid(s) to form a polyester;
3) reacting the polyester from step 2) with fatty acids, to form an alkyd

In step (1) above preferred sulfo salts are those obtained from acids (for example the sodium salt of 5-(sulfo)isophthalic acid - SSIPA). Preferred polyfunctional reactive compounds are polyacids and/or polyols, more preferably polyols such as neopentylglycol (also referred to herein as NPG) and/or trimethylolpropane (also referred to herein as TMP).

In step (2) a second polyfunctional reactive compound may preferably comprise one or more glycols such as those selected from: NPG, TMP, glycerol and/or pentaerytritol and/or one or more diacid(s) such as those selected from: hexahydrophthalic anhydride (also referred to herein as HHPA) and/or phthalic anhydride (also referred to herein as PA). Preferred polyesters formed from step (2) are SSIPA based polyesters.

The preferred product obtained from step (3) comprises a SSIPA based alkyd). Preferably in step 3) the fatty acid is added sufficiently slowly (e.g. dropwise) to maintain compatibility and complete the process described above.

Preferably the isocyanate (NCO)- reactive groups are active hydrogens, more preferably are represented by X-H, where X independently in each case represents O and/or N-R where R is H or C₁₋₁₀hydrocarbo (for example R is H or C₁₋₄alkyl).

Usefully the non-protic solvent used in step (i) has a boiling point (under atmospheric conditions) of less than 125°C.

Preferably component (i) comprises one or more different monomers, oligomers and/or polymers containing an X-H moiety, more preferably comprises an oligomer and/or polymer selected from acrylic, polyester and/or alkyd.

Preferably the acid moiety (component (iii)) comprises neutralized or partially neutralized strong acid group selected from sulfonated moieties, phosphonated moieties and/or derivatives thereof, more preferably is an aromatic sulfonated acid or salt thereof, even more preferably is an alkali metal sulfo salt of a benzene dicarboxylic acid and/or esters thereof such as dialkyl esters e.g. the dimethyl ester, The sodium salt of 5-(sulfo)isophthalic acid (SSIPA)is most preferred and is represented by formula:

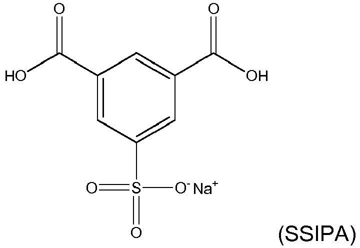

Usefully where a moiety comprising a (fully or partially neutralized) acid group having a pKa less than 3 (component (iii)) is present on the same macromolecule forming a NCO-reactive polymer (or part thereof) the NCO-reactive group and acid groups are so positioned thereon that they are substantially incapable of reacting with each other (e.g. by steric hindrance and/or distance from each other) and/or the strong acid group is non-NCO reactive (e.g. is completely neutralized to remove any active-hydrogen groups) .

In an alternative embodiment the acid group may comprise a DMPA moiety optionally partially or completely neutralized.

In one embodiment of the invention the process comprises the steps of reacting excess of glycol with SSIPA and then esterifying the product with glycols, polyacids and fatty acid derived and/or derivable from alkyd, reacting in a urethane reaction the resultant alkyd with di-isocyanate (e.g. isophorone diisocyanate - also referred to herein as IPDI) and optionally polyol in the presence of a non protic solvent (e.g. acetone) to obtain a second alkyd as an intermediate resin, and emulsifying the resin using solvent assisted dispersion (SAD) to form an aqueous dispersion of an uralkyd resin. The resulting products are VOC free and show a reduced yellow tendency, compared to those neutralized with amines, an improved water resistance compared to those neutralized with salts and an excellent blocking resistance.

In a further embodiment of the process of the invention comprises the steps of
1) reacting SSIPA with an excess of NPG and/or TMP to form a diester.
2) reacting the diester from step (2) with additional glycols (e.g. NPG, TMP, glycerol and/or pentaerytritol), diacids (e.g. HHPA, PA) and monoacids to form a SSIPA based alkyd. These monoacids need to be added slowly in order to maintain compatibility.
3) reacting in acetone the SSIPA based alkyd with isocyanate (e.g. IPDI) and diols (e.g. NPG and/or 1,3/1,4-cyclohexanedimethanol (also referred to herein as CHDM) to form an uralkyd (also denoted herein the 'emulsifier alkyd');
4) reacting the uralkyd from step (3) ('emulsifier alkyd') with a different alkyd (also denoted herein the 'performance alkyd') to form (after the desired conversion) a product;
5) dispersing the product from step(4) in water;
6) optionally removing VOC from the dispersion from step (5) to obtain a substantially VOC free uralkyd dispersion.

Additional performance advantage of the SSIPA based PUD in comparison with a PUD neutralized with an amine is an improved yellowing resistance. Another advantage is that an SSIPA based PUD has a very good water resistance whereas a traditional PUD made with dimethylol propionic acid neutralized with a salt like NaOH, KOH or LiOH has a poor water resistance. Surprisingly even two times increased amount of SSIPA, in comparison to KOH (on molar basis), still leads to an excellent water resistance.

The following components may preferably be present in the following amounts by weight given as parts by weight or percentages by weight of the total amount of components where present.

Preferably component (i) (isocyanate-reactive monomer, oligomers and polymer) is present in an amount from 15 to 98, more preferably from 20 to 60, most preferably 30 to 50 by weight.
Preferably component (i) comprises 2-20%, more preferably 4-15%, most preferably 5-10% by weight of a fully, partially or non-neutralized acid group having a pKa less than 3.

Preferably component (ii) (the polyisocyanate) is present in an amount from 2 to 50, more preferably from 4 to 25, most preferably 6 to 15 by weight.

Preferably component (iii) (optionally different monomer, oligomers, polymer) is present in an amount from 0 to 85, more preferably from 20 to 60, most preferably 30 to 50 by weight.

The term acid preferably denotes a compound or moiety having an anionic dispersing groups with a pKa < 3) such as a sulfonated or phosphonated acid, that under the conditions (under which the polyurethane dispersion is prepared) will stabilise the polymer. Preferred acids for use in the present invention have a pKa < 2.5, more preferably < 2.0, most preferably < 1.5 for example about 1.2. Preferred alkali metal salts comprise cations such as potassium, sodium and/or lithium.

Preferred anionic dispersing groups are phosphate, phosphonate, sulfonate or sulfate acid groups. Preferred potentially anionic dispersing groups are precursors for the anionic dispersing groups described herein, i.e. groups which under the conditions of step (a) will transform into the anionic dispersing groups. Most preferred anionic dispersing groups are sulfonic acid groups. Preferably conversion to the salt form of the strong acid is achieved by neutralisation of anionic groups with an alkali metal neutralising agent.

The polyurethane dispersions of the invention may (unless indicated otherwise herein) be prepared conventionally using conventional polyols and isocyanates.

For example the polyisocyanate used in the present invention as component one may be selected from those described in WO2007-006586 as polyisocyanate component (i) (see from page 7, line 33 to page 8, line 20 - this passage incorporated herein by reference).

For example the NCO-reactive polymers may comprise NCO-reactive polyols (subject to the other requirements for these components specified herein) selected from those described in WO2007-006586 as components (ii), (iii) and/or (iv) (see from page 8, line 30 to page 9, line 24 - this passage also incorporated herein by reference)

Suitable polyisocyanates may comprise aliphatic, cycloaliphatic, araliphatic, aromatic and/or polyisocyanates modified by the introduction of urethane, allophanate, urea, biuret, carbodiimide, uretonimine, urethdione or isocyanurate residues. Examples of suitable polyisocyanates include ethylene diisocyanate, 1,6-hexamethylene diisocyanate, isophorone diisocyanate, cyclohexane-1, 4-diisocyanate, 4,4'-dicyclohexylmethane diisocyanate, p-xylylene diisocyanate, α,α'-tetramethylxylene diisocyanate, 1,4-phenylene diisocyanate, 2,4-toluene diisocyanate, 2,6-toluene diisocyanate, 4,4'-diphenylmethane diisocyanate, polymethylene polyphenyl polyisocyanates, 2,4'-diphenylmethane diisocyanate, 3(4)-isocyanatomethyl-1-methyl cyclohexyl isocyanate, 1,5-naphthylene diisocyanate, Desmodur HDTLV and mixtures thereof. Preferred polyisocyanates are isophorone diisocyanate, 4,4'-dicyclohexylmethane diisocyanate, toluenediisocyanate and 4,4'-diphenylmethane diisocyanate.

Suitable polyols may comprise propylene glycols, polypropylene oxide/ethylene oxide) copolymers, polytetrahydrofuran, polybutadiene, hydrogenated polybutadiene, poysiloxane, polyamide polyesters, isocyanate-reactive polyoxyethylene compounds, polyester, polyether, polyether ester, polycaprolactone, polythioether, polycarbonate, polyethercarbonate, polyacetal and polyolefin polyols.

Optionally additional surfactant may be added to facilitate dispersing the urethane however this is not preferred as it has a detrimental effect on the water resistance and the hardness development

Preferred compositions of the invention have low acid values (AV), more preferably the AV of the total composition is below 10, most preferably below 1 mg KOH / g.

It is appreciated that certain features of the invention, which are for clarity described in the context of separate embodiments may also be provided in combination in a single embodiment. Conversely various features of the invention, which are for brevity, described in the context of a single embodiment, may also be provided separately or in any suitable sub combination.

The object of the present invention is to solve some or all of the problems or disadvantages (such as identified throughout the application herein) with the prior art.

Unless the context clearly indicates otherwise, as used herein plural forms of the terms herein are to be construed as including the singular form and vice versa.

The term comprising as used herein will be understood to mean that the list following is non-exhaustive and may or may not include any other additional suitable items, for example one or more further feature(s), component(s), ingredient(s) and/or substituent(s) as appropriate.

The terms effective, acceptable, active and/or suitable (for example with reference to any process, use, method, application, preparation, product, material, formulation, compound, monomer, oligomer, polymer precursor, and/or polymers described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

A preferred utility of the present invention comprises as component of a coating composition.

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

For all upper and/or lower boundaries of any parameters given herein, the boundary value is included in the value for each parameter. It will also be understood that all combinations of preferred and/or intermediate minimum and maximum boundary values of the parameters described herein in various embodiments of the invention may also be used to define alternative ranges for each parameter for various other embodiments and/or preferences of the invention whether or not the combination of such values has been specifically disclosed herein.

Thus for example a substance stated as present herein in an amount from 0 to "x" (e.g. in units of mass and/or weight %) is meant (unless the context clearly indicates otherwise) to encompass both of two alternatives, firstly a broader alternative that the substance may optionally not be present (when the amount is zero) or present only in a de-minimus amount below that can be detected. A second preferred alternative (denoted by a lower amount of zero in a range for amount of substance) indicates that the substance is present, and zero indicates that the lower amount is a very small trace amount for example any amount sufficient to be detected by suitable conventional analytical techniques and more preferably zero denotes that the lower limit of amount of substance is greater than or equal to 0.001 by weight % (calculated as described herein).

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non-exhaustive the sum of the percentage for each of such components may be less than 100% to allow a certain percentage for additional amount(s) of any additional component(s) that may not be explicitly described herein.

In the present invention, unless the context clearly indicates otherwise, an amount of an ingredient stated to be present in the composition of the invention when expressed as a weight percentage, is calculated based on the total amount of monomers in the composition being equivalent to 100% after reaction. For convenience certain non-monomer ingredients which fall outside the definitions of any of components herein may also be calculated as weight percentages based on total monomer (i.e. where the weight of total monomers alone is set at 100%). As the weight % of monomers by definition total 100% it will be seen that using monomer based weight % values for the non-monomer ingredients will mean the total percentages will exceed 100%. Thus amounts of non-monomer ingredients expressed as monomer based weight percentages can be considered as providing a ratio for the weight amounts for these ingredients with respect to the total weight of monomers which is used only as a reference for calculation rather than as a strict percentage. Further ingredients are not excluded from the composition and weight percentages based on total monomers should not be confused with weight percentages of the total composition.

The term substantially as used herein may refer to a quantity or entity to imply a large amount or proportion thereof. Where it is relevant in the context in which it is used substantially can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially free" may similarly denote that quantity or entity to which it refers comprises no more than 20%, preferably no more than 15%, more preferably no more than 10%, most preferably no more than 5%, especially no more than 2%, for example about 0% of the relevant whole.

The synonymous terms organic substituent, moiety and/or organic group as used herein (also abbreviated herein to organo) denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur.

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term alkyl or its equivalent (e.g. alk) as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}organo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from 1 to 12, especially from 1 to 10, for example from 1 to 4 carbon atoms.

As used herein chemical terms (other than IUPAC names for specifically identified compounds) which comprise features which are given in parentheses - such as (alkyl)acrylate, (meth)acrylate and/or (co)polymer denote that that part in parentheses is optional as the context dictates, so for example the term (meth)acrylate denotes both methacrylate and acrylate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, π adducts, solvates and/or hydrates); isotopically substituted forms, polymeric configurations [such as homo or copolymers, random, graft and/or block polymers, linear and/or branched polymers (e.g. star and/or side branched), cross linked and/or networked polymers, polymers obtainable from di and/or tri valent repeat units, dendrimers, polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

Polymers of the present invention may be prepared by one or more suitable polymer precursor(s) which may be organic and/or inorganic and comprise any suitable (co)monomer(s), (co)polymer(s) [including homopolymer(s)] and mixtures thereof which comprise moieties which are capable of forming a bond with the or each polymer precursor(s) to provide chain extension and/or cross linking with another of the or each polymer precursor(s) via direct bond(s) as indicated herein.

Polymer precursors of the invention may comprise one or more monomer(s), oligomer(s), polymer(s); mixtures thereof and/or combinations thereof which have suitable polymerisable functionality. It will be understood that unless the context dictates otherwise term monomer as used herein encompasses the term polymer precursor and does not necessarily exclude monomers that may themselves be polymeric and/or oligomeric in character.

A monomer is a substantially monodisperse compound of a low molecular weight (for example less than one thousand g/mole) which is capable of being polymerised.

A polymer is a polydisperse mixture of macromolecules of large molecular weight (for example many thousands of g/mole) prepared by a polymerisation method, where the macromolecules comprises the multiple repetition of smaller units (which may themselves be monomers, oligomers and/or polymers) and where (unless properties are critically dependent on fine details of the molecular structure) the addition or removal one or a few of the units has a negligible effect on the properties of the macromolecule.

A oligomer is a polydisperse mixture of molecules having an intermediate molecular weight between a monomer and polymer, the molecules comprising a small plurality of monomer units the removal of one or a few of which would significantly vary the properties of the molecule.

Depending on the context the term polymer may or may not encompass oligomer.

The polymer precursor of and/or used in the invention may be prepared by direct synthesis or (if the polymeric precursor is itself polymeric) by polymerisation. If a polymerisable polymer is itself used as a polymer precursor of and/or used in the invention it is preferred that such a polymer precursor has a low polydispersity, more preferably is substantially monodisperse, to minimise the side reactions, number of by products and/or polydispersity in any polymeric material formed from this polymer precursor. The polymer precursor(s) may be substantially unreactive at normal temperatures and pressures.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimise the physical entanglement or interlocation with the resin or they may or may not comprise other reactive entities capable of chemically reacting and/or cross linking with such other resins as appropriate.

Another aspect of the invention broadly provides a coating composition comprising the polymers of the present invention and/or as described herein.

A further aspect of the invention provides a coating obtained or obtainable from a coating composition of the present invention.

A yet other aspect of the invention broadly provides a substrate and/or article having coated thereon an (optionally cured) coating composition of the present invention.

A yet further aspect of the invention broadly provides a method of using polymers of the present invention and/or as described herein to prepare a coating composition.

A still further aspect of the invention broadly provides a method for preparing a coated substrate and/or article comprising the steps of applying a coating composition of the present invention to the substrate and/or article and optionally curing said composition in situ to form a cured coating thereon. The curing may be by any suitable means, such as thermally, oxidative, by radiation and/or by use of a cross linker.

Preferred coating compositions are solvent coating compositions or aqueous coating compositions, more preferably are aqueous coating compositions.

The compositions of the invention are particularly useful as or for providing the principle component of coating formulations (i.e. composition intended for application to a substrate without further treatment or additions thereto) such as protective or decorative coating compositions (for example paint, lacquer or varnish) wherein an initially prepared composition optionally may be further diluted with water and/or organic solvents, and/or combined with further ingredients or may be in more concentrated form by optional evaporation of water and/or organic components of the liquid medium of an initially prepared composition.

The compositions of the invention may be used in various applications and for such purposes may be optionally further combined or formulated with other additives and/or components, such as defoamers, rheology control agents, thickeners, dispersing and/or stabilizing agents (usually surfactants and/or emulsifiers), wetting agents, fillers, extenders, fungicides, bactericides, coalescing and wetting solvents or co solvents (although solvents are not normally required), plasticisers, antifreeze agents, waxes, colorants, pigments, dyes, heat stabilisers, levelling agents, anti-cratering agents, fillers, sedimentation inhibitors, UV absorbers, antioxidants, reactive diluents, neutralising agents, adhesion promoters and/or any suitable mixtures thereof.

The aforementioned additives and/or components and the like may be introduced at any stage of the production process or subsequently. It is possible to include fire retardants (such as antimony oxide) to enhance fire retardant properties.

The compositions of the invention may also be blended with other polymers such as vinyl polymers, alkyds (saturated or unsaturated), polyesters and or polyurethanes.

The coating composition of the invention may be applied to a variety of substrates including wood, board, metals, stone, concrete, glass, cloth, leather, paper, plastics, foam and the like, by any conventional method including brushing, dipping, flow coating, spraying, and the like. The coating composition of the invention may also be used to coat the interior and/or exterior surfaces of three dimensional articles. The coating compositions of the invention may also be used, appropriately formulated if necessary, for the provision of films, polishes, varnishes, lacquers, paints, inks and adhesives. However, they are particularly useful and suitable for providing the basis of protective coatings for substrates that comprise wood (e.g. wooden floors), plastics, polymeric materials, paper and/or metal.

The carrier medium may be removed from the compositions of the invention once they have been applied to a substrate by being allowed to dry naturally at ambient temperature, or the drying process may be accelerated by heat. Crosslinking can be developed by allowing to stand for a prolonged period at ambient temperature (several days) or by heating at an elevated temperature (e.g. 50 °C) for a much shorter period of time.

Many other variations embodiments of the invention will be apparent to those skilled in the art and such variations are contemplated within the broad scope of the present invention.

Further aspects of the invention and preferred features thereof are given in the claims herein.

Compositions and dispersions of the invention advantageously include one or more drier salts. Drier salts are well known to those skilled in the art for further improving air-curing in unsaturated film-forming substances. Generally speaking, drier salts are metallic soaps, these are salts of metals and long chain carboxylic acids. It is thought that the metallic ions effect the curing action in the film coating and the fatty acid components confer compatibility in the coating medium. The most important drier metals are cobalt, manganese, zirconium, lead and calcium. The level of drier salts in the composition is typically that to provide an amount of metals within the range of from 0.02 to 0.5 % by weight based on the weight of the uralkyd resin. Drier salts are conventionally supplied as solutions in white spirit for use in solvent-borne alkyd systems. They may, however, be used quite satisfactorily in aqueous-based coating dispersions since they can normally be dispersed in such systems fairly easily. The drier salts may be incorporated into the composition or dispersion at any convenient stage. For example, it may be added to the uralkyd resin, along with any neutralising amine (or ammonia), if used, prior to dispersion into water.

### STANDARD CONDITIONS

As used herein, unless the context indicates otherwise, standard conditions (e.g. for drying a film) means a relative humidity of 50% ±5%, ambient temperature (which denotes herein a temperature of 23°C ±2°) and an air flow of ≤ (less than or equal to) 0.1m/s.

### WATER RESISTANCE

Paints are applied by a film applicator on a glass panel. The coated test panels are dried at room temperature for 24 hours. On these films three drops of demineralized water with a diameter of approximately 10 mm were applied with pipette, making sure the distance to the edge of the coating and to the other drops is at least 10 mm.

After the desired period (standard 30 min, 1 hour and 3 hours) the drops of water are carefully removed with a paper tissue. Note the visible damage of the coating and check the recovery of the film on the spots 24 hours after removal of the water spot. Give a rating from 5 (=excellent) to 0 (=poor).

### BLOCKING RESISTANCE

Paints are applied on Leneta foil (Black Scrub Test Panel) using a wire rod with a wet film thickness of 100 micron. The coated test panels are dried at room temperature for 24 hours. Out of the films, pieces of 2x2 cm were cut and pressed together, paint film facing paint film, for 2 hours at 50°C. A pressure of 250 g/cm² was used. The pieces were separated manually and the degree of damaging to the coating (0=very poor, 5=excellent) and the percentage of the surface that actually delaminated from the Leneta was assessed.

### KONIG HARDNESS

Paints are applied by using a film applicator with a gap size of 100 micron on a glass panel. The coated test panels are dried at room temperature and hardness in seconds is determined using König pendulum tester after 1, 7 and 28 days.

### GLOSS

Paints are applied by using a film applicator with a gap size of 100 micron on white PVC. The coated test panels are dried at room temperature and gloss at 20°, 60° and 85°C are determined after 1, 7 and 28 days.

### YELLOWING

Paints are applied using a film applicator with a gap size of 100 micron on Leneta foil (Black Scrub Test Panel). The coated test panels are dried at room temperature. The colour is measured according to CieLab (L-value, a-value, b-value) after 7 days after which the panel is placed in a stove at 50°C. Again the colour is measured after 1, 2 and 3 weeks. Yellowing is determined as delta b as change in b value after 3 weeks compared to the initial measurement.

### DRYING

Paints are applied by using a film applicator with a gap size of 100 micron on glass. The coated test panels are dried at room temperature. To determine the tack free time, a piece of cotton-wool is pressed on the paint surface with a weight of 1 kg for 10 seconds. After removal of the weight, the glass panel is turned. When the cotton wool falls without any pieces sticking to the surface, the coating has reached it tack free time.

### SOLIDS CONTENT

The solids content of an aqueous dispersion of the invention is usually within the range of from about 20 to 65 % by weight (wt-%) on a total weight basis, more usually 30 to 55 wt-%. Solids content can, if desired, be adjusted by adding water or removing water (e.g. by distillation or ultrafiltration).

### pH VALUE

The pH value of the dispersion of the invention can be from 2 to 10 and mostly is from 5 to 9.5.

### MOLECULAR WEIGHT

Unless the context clearly dictates otherwise the term molecular weight of a polymer or oligomer as used herein denotes weight average molecular weight (also denoted as Mw). Mw may be measured by any suitable conventional method for example by Gel Permeation Chromatography (GPC - performed similarly to the GCMS method described above) and/or by the SEC method described below. GPC method is preferred

Determination of molecular weight of a polymer using SEC

The molecular weight of a polymer may also be determined using Size Exclusion Chromatography (SEC) with tetrahydrofuran as the eluent or with 1,1,1,3,3,3 hexafluoro isopropanol as the eluent.

### 1) tetrahydrofuran

The SEC analyses were performed on an Alliance Separation Module (Waters 2690), including a pump, auto injector, degasser, and column oven. The eluent was tetrahydrofuran (THF) with the addition of 1.0 vol. % acetic acid. The injection volume was 150µl. The flow was established at 1.0 ml/min. Three PL MixedB (Polymer Laboratories) with a guard column (3µm PL) were applied at a temperature of 40°C. The detection was performed with a differential refractive index detector (Waters 410). The sample solutions were prepared with a concentration of 20 mg solids in 8 ml THF (+ 1vol% acetic acid), and the samples were dissolved for a period of 24 hours. Calibration is performed with eight polystyrene standards (polymer standard services), ranging from 500 to 4,000,000 g/mol. The calculation was performed with Millennium 32 software (Waters) with a third order calibration curve. The obtained molar masses are polystyrene equivalent molar masses (g/mol).

### 2) 1,1,1,3,3,3 hexafluoro isopropanol

The SEC analyses were performed on a Waters Alliance 2695 (pump, degasser and autosampler) with a Shodex RI 101 differential refractive index detector and Shimadzu CTO 20AC column oven. The eluent was 1,1,1,3,3,3 hexafluoro isopropanol (HFIP) with the addition of 0.2M potassium trifluoro acetate (KTFA). The injection volume was 50µl. The flow was established at 0.8 ml/min. Two PSS PFG Linear XL columns (Polymer Standards Service) with a guard column (PFG PSS) were applied at a temperature of 40°C. The detection was performed with a differential refractive index detector. The sample solutions were prepared with a concentration of 5 mg solids in 2 ml HFIP (+ 0.2M KTFA), and the samples were dissolved for a period of 24 hours. Calibration is performed with eleven polymethyl methacrylate standards (polymer standard services), ranging from 500 to 2,000,000 g/mol. The calculation was performed with Empower Pro software (Waters) with a third order calibration curve. The molar mass distribution is obtained via conventional calibration and the molar masses are polymethyl methacrylate equivalent molar masses (g/mol).

The following examples are provided to further illustrate the processes and compositions of the present invention. These examples are illustrative only and are not intended to limit the scope of the invention in any way. Unless otherwise specified all parts, percentages, and ratios are on a weight basis. The prefix Comp before an example indicates that it is comparative.

Various registered trademarks, other designations and/or abbreviations are used herein to denote some of ingredients used to prepare polymers and compositions of the invention. These are identified below by chemical name and/or trade name and optionally their manufacturer or supplier from whom they are available commercially. However where a chemical name and/or supplier of a material described herein is not given it may easily be found for example in reference literature well known to those skilled in the art: such as: 'McCutcheon's Emulsifiers and Detergents', Rock Road, Glen Rock, N.J. 07452 1700, USA, 1997 and/or Hawley's Condensed Chemical Dictionary (14th Edition) by Lewis, Richard J., Sr.; John Wiley & Sons.

### Examples

The present invention will now be described in detail with reference to the following non limiting example which is by way of illustration only. The following examples may be prepared as described. The amount of each component is given in brackets as a relative parts by weight of total of components below.

### Polyol I - Fatty acid modified polyester polyol

### (Polyol I is used to prepare comparative resin - Comp A)

Soybean fatty acid (560 g), benzoic acid (244 g), pentaerythritol (272 g) and hexahydrophthalic anhydride (154 g) were heated in a reactor at temperature from 230 to 240°C in the presence of xylene (40 g) as an entraining agent. The water produced by the resultant reaction was removed by azeotropic distillation until the acid number of the reaction mixture was less than 5 mg KOH / g. After completion of the reaction the xylene was removed by azeotropic distillation under reduced pressure (at 200°C at a pressure of 0.3 bar) to obtain a fatty acid modified polyester polyol (Polyol I) which .was allowed to cool to ambient temperature and then dissolved in acetone (200 g). Polyol I had a theoretical hydroxyl value of 98 mg KOH / g.

### Polvol II - Fatty acid modified polyester polyol

### (Polyol II is used to prepare all resin examples of the invention)

Soybean fatty acid (1260 g), benzoic acid (366 g), pentaerythritol (681 g) and hexahydrophthalic anhydride (771 g) were heated in a reactor at temperature from 230 to 240°C in the presence of xylene (90 g) as an entraining agent, The water produced by the resultant reaction was removed by azeotropic distillation until the acid number of the reaction mixture was less than 10 mg KOH / g. After completion of the reaction the xylene was removed by azeotropic distillation under reduced pressure (at 200°C at a pressure of 0.3 bar) to obtain a fatty acid modified polyester polyol (Polyol II) which was allowed to cool to ambient temperature and then dissolved in acetone (950 g). Polyol II had a theoretical hydroxyl value of 49 mg KOH / g.

### Polyol III - Fatty acid modified polyester polyol

### (Polyol III is used to prepare resin in Examples 1 and 5

Neopentyl glycol (97.1 g), trimethylolpropane (117.8 g) and 5-sodium (sulfo)isophthalic acid (97.1 g) were heated in a reactor to 200°C. The water produced by this reaction was removed by distillation until the acid number of the reaction mixture was less than 5 mg KOH / g. After completion of this reaction pentaerythritol (80.1 g) and hexahydrophthalic anhydride (215.4 g) were added to the resultant mixture. This mixture was then heated to a reaction temperature of 180°C in the presence of xylene as an entraining agent and tall oil fatty acid (573.3 g) was added slowly over half an hour. The water produced by the reaction was removed by azeotropic distillation until the acid number of the reaction mixture was less than 5 mg KOH / g. After completion of this reaction the xylene was removed by azeotropic distillation under reduced pressure (at 200°C at a pressure of 0.3 bar) to obtain a fatty acid modified polyester polyol (Polyol III) which was allowed to cool to ambient temperature and then dissolved in acetone (in amount of 85 wt-%). Polyol III had a theoretical hydroxyl value of 60 mg KOH / g.

### Polyol IV - Fatty acid modified polyester polyol

### (Polyol IV is used to prepare resin in Example 2)

Neopentyl glycol (128.5 g), trimethylolpropane (144.8 g) and 5-sodium (sulfo)isophthalic acid (117.8 g) were heated in a reactor to 200°C. The water produced by this reaction was removed by distillation until the acid number of the reaction mixture was less than 5 mg KOH / g. After completion of this reaction pentaerythritol (63 g) and hexahydrophthalic anhydride (267.8 g) were added to the resultant mixture. This mixture was then heated to a reaction temperature of 180°C in the presence of xylene as an entraining agent and tall oil fatty acid (561.2 g) was added slowly over half an hour. The water produced by the reaction was removed by azeotropic distillation until the acid number of the reaction mixture was less than 5 mg KOH / g. After completion of this reaction the xylene was removed by azeotropic distillation under reduced pressure (at 200°C at a pressure of 0.3 bar) to obtain a fatty acid modified polyester polyol (Polyol IV) which was allowed to cool to ambient temperature and then dissolved in acetone (in amount of 85 wt-%). Polyol IV had a theoretical hydroxyl value of 56 mg KOH / g.

### Polyol V - Fatty acid modified polyester polyol

### (Polyol V is used to prepare resin in Examples 3, 7 and 8)

Neopentyl glycol (240.1 g), trimethylolpropane (268.4 g) and the sodium salt of dimethyl-5-sulfolsophthalate (244.4 g) were heated in a reactor to 235°C. The methanol produced by this reaction was removed by distillation until the acid number of the reaction mixture was less than 5 mg KOH / g. After completion of this reaction pentaerythritol (181.9 g) and hexahydrophthalic anhydride (489.4 g) were added to the resultant mixture. This mixture was then heated to a reaction temperature of 180°C in the presence of xylene as an entraining agent and tall oil fatty acid (1302.4 g) was added slowly over half an hour. The water produced by the reaction was removed by azeotropic distillation. The reaction temperature was slowly increased till 235°C and held at that temperature until the acid number of the reaction mixture was less than 5 mg KOH / g. After completion of this reaction the xylene was removed by azeotropic distillation under reduced pressure (at 200°C at a pressure of 0.3 bar) to obtain a fatty acid modified polyester polyol (Polyol V) which was allowed to cool to ambient temperature and then dissolved in acetone (in amount of 80 wt-%). Polyol V had a theoretical hydroxyl value of 60 mg KOH / g.

### Polyol VI - Fatty acid modified polyester polyol

### (Polyol VI is used to prepare resin in Example 4)

Neopentyl glycol (138.7 g), trimethylolpropane (161.4 g) and 5-lithiosulfoisophthalic acid (125.0 g) were heated in a reactor to 235°C. The water produced by this reaction was removed by distillation until the acid number of the reaction mixture was less than 5 mg KOH / g. After completion of this reaction pentaerythritol (109.7 g) and hexahydrophthalic anhydride (295.2 g) were added to the resultant mixture. This mixture was then heated to a reaction temperature of 180°C in the presence of xylene as an entraining agent and tall oil fatty acid (785.6 g) was added slowly over half an hour. The water produced by the reaction was removed by azeotropic distillation. The reaction temperature was slowly increased till 235°C and held at that temperature until the acid number of the reaction mixture was less than 5 mg KOH / g. After completion of this reaction the xylene was removed by azeotropic distillation under reduced pressure (at 200°C at a pressure of 0.3 bar) to obtain a fatty acid modified polyester polyol (Polyol VI) which was allowed to cool to ambient temperature and then dissolved in acetone (in amount of 85 wt-%). Polyol VI had a theoretical hydroxyl value of 60 mg KOH / g.

### Polyol VII - Fatty acid modified polyester polyol

### (Polyol VII is used to prepare the resin in Example 6)

Demineralized water (38.077), neopentyl glycol (126.1 g), trimethylolpropane (163.0 g) and 5-sodium (sulfo)isophthalic acid (134.4 g), zinc acetate dehydrate (0.838 g), lithium hydroxide monohydrate (0.114) and sodium acetate (anhydrous, 0.114) were heated in a reactor to 235°C. The water produced by this reaction was removed by distillation until the acid number of the reaction mixture was less than 5 mg KOH / g. After completion of this reaction neopentylglycol (32.2 g), pentaerythritol (110.8 g) and tetrahydrophthalic anhydride (294.3 g) were added to the resultant mixture. This mixture was then heated to a reaction temperature of 180°C in the presence of xylene as an entraining agent and tall oil fatty acid (30.7 g) and soybean oil fatty acid (762.8) were both added slowly over half an hour. The water produced by the reaction was removed by azeotropic distillation. The reaction temperature was slowly increased till 235°C and held at that temperature until the acid number of the reaction mixture was less than 5 mg KOH / g. After completion of this reaction the xylene was removed by azeotropic distillation under reduced pressure (at 200°C at a pressure of 0.3 bar) to obtain a fatty acid modified polyester polyol (Polyol VII) which was allowed to cool to ambient temperature and then dissolved in acetone (in amount of 80 wt-%). Polyol VII had a theoretical hydroxyl value of 62 mg KOH / g.

### Resins according to the invention

### Example 1-Water-dispersed, air-drying uralkyd resin

Fatty acid modified polyester polyol (248.3 g) (Polyol III as prepared above in acetone), neopentylglycol (9.1 g), Desmodur I (44g), (supplied under this trade name by Bayer, Desmodur I is a cycloaliphatic diisocyanate based on IPDI, 3-isocyanatomethyl-3,5,5-trimethylcyclohexyl isocyanate with a minimum NCO content of 37.5%), Coscat 83 (2g) (supplied under this trade name by Vertellus, Coscat 83 is a bismuth catalyst) and acetone (176.3 g) were heated in a reactor at 60°C and allowed to react until the NCO content of the mixture was 0.7 %. The reaction mixture was then cooled to 50°C and fatty acid modified polyester polyol (428.6 g) (Polyol II as prepared above in acetone) and an additional 100 g of acetone was added. The reaction was continued at 60°C until the NCO content of the mixture was less than 0.1 %. The resultant uralkyd resin was cooled to 45°C and dispersed in demineralised water (886.3 g) and the acetone was removed by distillation. The resultant dispersion was adjusted with demineralised water to a solids content of 40 %.

### Example 2 - Water-dispersed, air-drying uralkyd resin

Fatty acid modified polyester polyol (248.3 g) (Polyol IV as prepared above in acetone), neopentylglycol (7.4 g), Desmodur I (44 g, see Ex 1), Coscat 83 (2 g, see Ex 1) and acetone (176.3 g) were heated in a reactor at 60°C and allowed to react until the NCO content of the mixture was 1.3%. The reaction mixture was then cooled to 50°C and fatty acid modified polyester polyol (430.0 g) (Polyol II as prepared above in acetone) and an additional 100 gram of acetone was added. The reaction was continued at 60°C until the NCO content of the mixture was less than 0.1 %. The resultant uralkyd resin was cooled to 50°C and dispersed in demineralised water (889 g) and the acetone was removed by distillation. The resultant dispersion was adjusted with demineralised water to a solids content of 45 %.

### Example 3 - Water-dispersed, air-drying uralkyd resin

Fatty acid modified polyester polyol (242.4 g) (Polyol V as prepared above in acetone), neopentylglycol (30.1 g), Desmodur I, (92.0 g, see Ex 1), Coscat 83 (1.8 g, see Ex 1) and acetone (155 g) were heated in a reactor at 60°C and allowed to react until the NCO content of the mixture was 0.8%. The reaction mixture was cooled to 50°C and fatty acid modified polyester polyol (345.2 g) (Polyol II as prepared above in acetone) and an additional 100 gram of acetone was added. The reaction was continued at 60°C until the NCO content of the mixture was < 0.3 %. The resultant uralkyd resin was cooled to 50°C and dispersed in demineralised water (860 g) and the acetone was removed by distillation. The resultant dispersion was adjusted with demineralised water to a solids content of 45 %.

### Example 4 - Water-dispersed, air-drying uralkyd resin

Fatty acid modified polyester polyol (288.1 g) (Polyol VI as prepared above in acetone), neopentylglycol (30.2 g), Desmodur I, (92.0 g, see Ex 1), Coscat 83 (1.8 g, see Ex 1) and acetone (155 g) were heated in a reactor at 60°C and allowed to react until the NCO content of the mixture was 0.8%. The reaction mixture was cooled to 50°C and fatty acid modified polyester polyol (345.2 g) (Polyol II as prepared above in acetone) and an additional 100 gram of acetone was added. The reaction was continued at 60°C until the NCO content of the mixture was less than 0.3 %. The resultant uralkyd resin was cooled to 50°C and dispersed in demineralised water (1025 g) and the acetone was removed by distillation. The resultant dispersion was adjusted with demineralised water to a solids content of 45 %.

### Example 5 - Water-dispersed, air-drying uralkyd resin

Fatty acid modified polyester polyol (248.3 g) (Polyol III as prepared above in acetone), cyclohexyldimethanol (12.7 g), Desmodur I, (44 g, see Ex 1), Coscat 83 (2 g, see Ex 1) and acetone (176.3 g) were heated in a reactor at 60°C and allowed to react until the NCO content of the mixture was 0.7 %. The reaction mixture was cooled to 50°C and fatty acid modified polyester polyol (428.6 g) (Polyol II as prepared above in acetone) and an additional 100 gram of acetone was added. The reaction was continued at 60°C until the NCO content of the mixture was less than 0.1%. The resultant uralkyd resin was cooled to 45°C and dispersed in demineralised water (886.3 g) and the acetone was removed by distillation. The resultant dispersion was adjusted with demineralised water to a solids content of 40 %.

### Example 6 - Water-dispersed, air-drying uralkyd resin

Fatty acid modified polyester polyol (242.4 g) (Polyol VII as prepared above in acetone), neopentylglycol (29.9 g), Desmodur I, (92.0 g, see Ex 1), Coscat 83 (1.6 g, see Ex1) and acetone (135 g) were heated in a reactor at 60°C and allowed to react until the NCO content of the mixture was 0.9%. The reaction mixture was cooled to 50°C and fatty acid modified polyester polyol (345.2 g) (Polyol II as prepared above in acetone) and an additional 100 gram of acetone was added. The reaction was continued at 60°C until the NCO content of the mixture was less than 0.3 %. The resultant uralkyd resin was cooled to 50°C and dispersed in demineralised water (1025 g) and the acetone was removed by distillation. The resultant dispersion was adjusted with demineralised water to a solids content of 45 %.

### Example 7 - Water-dispersed, air-drying uralkyd resin

Fatty acid modified polyester polyol (242.4 g) (Polyol V as prepared above in acetone), neopentylglycol (28.0 g), Desmodur W, (108.7 g, supplied by Bayer under this trade name), Coscat 83 (1.6 g, see Ex 1) and acetone (170 g) were heated in a reactor at 60°C and allowed to react until the NCO content of the mixture was 1.2%. The reaction mixture was cooled to 50°C and fatty acid modified polyester polyol (345.2 g) (Polyol II as prepared above in acetone) and an additional 200 gram of acetone was added. The reaction was continued at 60°C until the NCO content of the mixture was less than 0.2 %. The resultant uralkyd resin was cooled to 50°C and dispersed in demineralised water (860 g) and the acetone was removed by distillation. The resultant dispersion was adjusted with demineralised water to a solids content of 45 %.

### Example 8 - Water-dispersed, air-drying uralkyd resin

Fatty acid modified polyester polyol (242.4 g) (Polyol V as prepared above in acetone), neopentylglycol (29.9 g), Ymer N-120 (11.72 g, supplied under this trade name by Perstorp), Desmodur I, (92.0 g, see Ex 1), Coscat 83 (1.6 g, see Ex 1) and acetone (150 g) were heated in a reactor at 60°C and allowed to react until the NCO content of the mixture was 1.1%. The reaction mixture was cooled to 50°C and fatty acid modified polyester polyol (345.2 g) (Polyol II as prepared above in acetone) and an additional 100 gram of acetone was added. The reaction was continued at 60°C until the NCO content of the mixture was less than 0.1 %. The resultant uralkyd resin was cooled to 50°C and dispersed in demineralised water (860 g) and the acetone was removed by distillation. The resultant dispersion was adjusted with demineralised water to a solids content of 45 %.

### Comparative resin

### Comparative Example A Water-dispersed, air-drying uralkyd resin - Comp A

Comp A was prepared by a known SAD process as follows:
Fatty acid modified polyester polyol I (220 g) as prepared above in acetone, DMPA (26 g), Desmodur I, (78 g, see Ex 1), triethylamine (20 g) and acetone (140 g) were heated in a reactor at 60°C and allowed to react until the NCO content of the mixture was 1.5 %. The reaction mixture was cooled to 50°C and fatty acid modified polyester (450 g) (Polyol II as prepared above in acetone) was added. The reaction was continued at 60°C until the NCO content of the mixture was less than 0.5 %. The resultant uralkyd resin was dispersed in demineralised water (880 g) and the acetone was removed by distillation in the presence of an anti-foam agent (BYK 011, supplied under this trade name by Byk). The resultant dispersion was adjusted with demineralised water to a solids content of 40 %.

The uralkyd resins of the invention (Examples 1 to 8) prepared as described herein by the SAD process of the invention and the comparative uralkyd resin (Comp A) made as described herein by a conventional SAD process were tested. The results given in Table 1 below. It can be seen the uralkyd resins of the invention have improved properties over the known uralkyd resin of comp A. In particular in a preferred embodiment of the invention the Examples 3, 4 and 5 which resins prepared using SSIPA, show especially improved properties.

**Table 1**

| | Comp A | Ex1 | Ex 2 | Ex 3 | Ex 4 | Ex 5 |
|---|---|---|---|---|---|---|
| wt% SSIPA (on solid) | 0 | 0 | 0 | 3.2 | 4.0 | 2.8 |
| "Salt value" (mg KOH/g) | 17 | 17 | 8.5 | 6.6 | 8.4 | 5.9 |
| Neutralized with/via | TEA | KOH | KOH | SSIPA | SSIPA | SSIPA |
| Water resistance | OK | NOK | NOK | OK | OK | OK |
| Labelling | Xi | None | None | None | None | None |
| VOC (g/l as supplied) | 15 | 0 | 0 | 0 | 0 | 0 |

The VOC values given herein (e.g. in the tables) are calculated based on the convention typically used in the EU of grams of VOC per litre of material supplied. This may be different from other conventions used for calculation of VOC in other countries (e.g. in US).

The resin dispersion prepared in the Examples above were used to formulate a coating composition suitable for application to a substrate as a top coat. The coating formulation prepared from comparative uralkyd Comp A is denoted Comp B and its composition is given in the following table (Table 2). Coating formulations of the resins Examples 1 to 8 are denoted respectively as Examples 9 to 16 and were prepared in a similar manner to Comp B.

**Table 2 (coating composition - Comp B)**

| Material | weight% |
|---|---|
| Demineralized water | 5,86 |
| Byk 028 | 0,32 |
| Disperbyk 2015 | 1,18 |
| Rheolate 212 | 0,57 |
| Kronos 2190 | 24,28 |
| Comp A | 61.63 |
| Rheolate 212 | 3,18 |
| BorchiOXY-Coat 1101 1:9 | 0,75 |
| Demineralized water | 2,23 |
| | 100,00 |

The above coating formulations (Examples 8 to 16 and Comp B) were applied to a substrate in a same conventional manner to form a top coat thereon and various parameters of the coatings were measured (as described in the test methods herein). The results are given in the following table (Table 3).

**Table 3**

| Coating composition | Comp B | Ex 9 | Ex 10 | Ex 11 | Ex 12 | Ex 13 | Ex 14 | Ex 15 | Ex 16 |
|---|---|---|---|---|---|---|---|---|---|
| Uralkyd | Comp A | Ex 1 | Ex 2 | Ex 3 | Ex 4 | Ex 5 | Ex 6 | Ex 7 | Ex 8 |
| Tack free time (h:min) | 0:53 | 4:17 | 4:24 | 0:40 | 0:47 | 5:00 | 0:45 | 0:45 | 2:30 |
| Water resistance | 4.5 | 4.5 | 4.5 | 4.5 | 4.5 | 4.5 | 3.3 | 4.5 | 4.5 |
| 20° Gloss after 4 weeks | 71 | 79 | 76 | 72 | 69 | 81 | 56 | 35 | 76 |
| König hardness after 4 weeks | 62 | 60 | 58 | 56 | 65 | 56 | 48 | 52 | 44 |
| Yellowing db after 3 weeks | 2.41 | 2.25 | 2.30 | 1.99 | 2.28 | 2.15 | 2.99 | 2.70 | 2.47 |
| Blocking resistance | 2 | 3-4 | 3-4 | 3-4 | 3 | 3-4 | 2-3 | 3-4 | 3 |
| Labelling | Xi | None | None | None | None | None | None | None | None |
| VOC (g/l) | 15 | 0 | 0 | 0 | 0 | 0 | 0 | 0 | 0 |

## Claims

1. A solvent assisted dispersion (SAD) process for preparing an aqueous polycondensate dispersion substantially free of solvents, said polycondensate comprises an uralkyd, the process comprising the steps of:
(a) reacting in the presence of a non-protic solvent a mixture of
(i) one or more polycondensate monomers, polycondensate oligomers and/or polycondensate polymers comprising a plurality of isocyanate-reactive groups; wherein the monomers, oligomers and/or polymers comprises 2-10% by weight of components (a)(i) of a fully, partially or non-neutralized acid group having a pKa less than 3, and
(ii) at least one multifunctional isocyanate,
to form a mixture of a first polycondensate resin and the non-protic solvent;
(b) optionally, reacting the first polycondensate resin from step (a) with at least one monomer, oligomer and/or polymer different from component (a) to form a second polycondensate resin;
(c) dispersing the first polycondensate resin from step (a) and/or the second polycondensate resin from step (b) in an aqueous medium to form an aqueous polycondensate dispersion;
(d) removing substantially all of the non-protic solvent from the dispersion from step (c) to form the aqueous polycondensation dispersion substantially-free of solvent
and wherein the acid groups are completely or partially neutralized in step (a), or in step (b) or before dispersing the polycondensate in water, and wherein the first and/or second polycondensate comprises an uralkyd that has a weight average molecular weight measured via Size Exclusion Chromatography according to the description with 1,1,1,3,3,3 hexafluoro isopropanol as eluent, of from 5,000 to 500,000 daltons.

2. The process as claimed in claim 1, wherein the polycondensate is an uralkyd.

3. The process as claimed in any preceding claim, wherein the first and/or second polycondensate comprises an uralkyd that has a number average molecular weight of from 1,000 to 200,000 daltons.

4. The process as claimed in any preceding claim, wherein the first and/or second polycondensate comprises an uralkyd that has a weight average molecular weight of from 5,000 to 200,000 daltons.

5. The process as claimed in any preceding claim, wherein the first and/or second polycondensate comprises an uralkyd that is obtainable from three- or higher functional hydroxyl and/or carboxy functional components.

6. The process as claimed in any preceding claim, wherein the product from step (d) has less than 0.1 wt-% of organic solvent by weight of total polycondensate resin.

7. The process as claimed in any one of claims 1 to 6, wherein the acid group is selected from the group consisting of sulfonated moieties, phosphonated moieties and derivatives thereof.

8. The process as claimed in any one of claims 1 to 6, wherein the acid group is an aromatic sulfonated acid group.

9. The process as claimed in any one of claims 1 to 6, wherein the acid group is an aromatic sulfonated salt.

10. The process as claimed in any one of claims 1 to 6, wherein the acid group is an alkali metal sulfo salt of a benzene dicarboxylic acid and/or ester thereof.

11. The process as claimed in any one of claims 1 to 6, wherein the acid group is the sodium salt of 5-(sulfo)isophthalic acid.

12. The process as claimed in any one of claims 1 to 6, wherein the process comprises the steps of:
1) reacting a sulfo salt of a suitable component selected from one or more acid, alcohol, amine, acid derivative thereof and/or mixtures thereof with an excess of a suitable polyfunctional compound reactive with the sulfo salt to form a multi-functional ester, conveniently a diester;
2) reacting the multi-functional ester (conveniently a diester) from step (1) with a second polyfunctional reactive compound (which may be the same or different from that used in step (1) and if the same is used in additional amounts from step (1)) and optionally monoacid(s) to form a polyester;
3) reacting the polyester from step 2) with fatty acids, to form an alkyd.

13. The process as claimed in claim 12, wherein the sulfo salt is the sodium salt of 5-(sulfo)isophthalic acid SSIPA.

14. The process as claimed in claim 12 or claim 13, wherein in step 3) the fatty acid is added sufficiently slowly (e.g. dropwise) to maintain compatibility.

15. The process as claimed in any one of claims 1 to 6, wherein the process comprises the steps of:
1) reacting the sodium salt of 5-(sulfo)isophthalic acid (SSIPA) with an excess of neopentylglycol and/or trimethylolpropane to form a diester; and
2) reacting the diester from step (1) with additional glycols, diacids and monoacids -which monoacids need to be added slowly in order to maintain compatibility-, to form a SSIPA based alkyd; and
3) reacting in acetone the SSIPA based alkyd with isocyanate and diols to form an uralkyd;
4) reacting the uralkyd from step (3) with a different alkyd, to form a product;
5) dispersing the product from step (4) in water to form a dispersion;
6) removing the volatile organic compounds (VOC) from the dispersion from step (5) to obtain a substantially VOC free uralkyd dispersion.

16. An aqueous dispersion of a polycondensate uralkyd obtainable by a process as claimed in any one of claims 1 to 15.

17. An aqueous coating composition comprising a polycondensate uralkyd obtainable by a process as claimed in any one of claims 1 to 15.

18. An article and/or substrate coated by a composition as claimed in claim 17.

19. A method of coating an article and/or substrate comprising the steps of
(I) applying an aqueous coating composition as claimed in claim 17 to an article and/or substrate, and
(II) drying the coating thereon to obtain a coated article and/or substrate.

## Patentansprüche

1. Lösemittelunterstütztes Dispersionsverfahren (SAD) zur Herstellung einer wässrigen Polykondensatdispersion, die im Wesentlichen lösemittelfrei ist, wobei das Polykondensat ein Uralkyd umfasst, wobei das Verfahren die folgenden Schritte umfasst:
(a) Umsetzen einer Mischung aus Folgendem in Gegenwart von einem aprotischen Lösemittel
(i) ein oder mehrere Polykondensatmonomere, Polykondensatoligomere und/oder Polykondensatpolymere, umfassend mehrere reaktive Isocyanatgruppen; wobei die Monomere, Oligomere und/oder Polymere 2 bis 10 Gew.-% der Komponenten (a)(i) einer vollständig, teilweise oder nicht neutralisierten Säuregruppe umfassen, die einen pKa von weniger als 3 aufweist, und
(ii) mindestens ein multifunktionelles Isocyanat, um eine Mischung aus einem ersten Polykondensatharz und dem aprotischen Lösemittel zu bilden;
(b) wahlweise Umsetzen des ersten Polykondensatharzes aus Schritt (a) mit mindestens einem Monomer, Oligomer und/oder Polymer, das sich von Komponente (a) unterscheidet, um ein zweites Polykondensatharz zu bilden;
(c) Dispergieren des ersten Polykondensatharzes aus Schritt (a) und/oder des zweiten Polykondensatharzes aus Schritt (b) in einem wässrigen Medium, um eine wässrige Polykondensatdispersion zu bilden;
(d) Entfernen von im Wesentlichen dem gesamten aprotischen Lösemittel aus der Dispersion aus Schritt (c), um eine wässrige Polykondensatdispersion zu bilden, die im Wesentlichen lösemittelfrei ist,
und wobei die Säuregruppen vollständig oder teilweise in Schritt (a) oder Schritt (b) neutralisiert werden, bevor das Polykondensat in Wasser dispergiert wird, und wobei das erste und/oder zweite Polykondensat ein Uralkyd umfasst, das ein gewichtsmittleres Molekulargewicht aufweist, das bei einer Messung mittels Größenausschlusschromatografie gemäß der Beschreibung mit 1,1,1,3,3,3-Hexafluorisopropanol als Eluent von 5.000 bis 500.000 Dalton beträgt.

2. Verfahren nach Anspruch 1, wobei das Polykondensat ein Uralkyd ist.

3. Verfahren nach einem der vorhergehenden Ansprüche, wobei das erste und/oder zweite Polykondensat ein Uralkyd umfasst, das ein zahlenmittleres Molekulargewicht von 1.000 bis 200.000 Dalton aufweist.

4. Verfahren nach einem der vorhergehenden Ansprüche, wobei das erste und/oder zweite Polykondensat ein Uralkyd umfasst, das ein gewichtsmittleres Molekulargewicht von 5.000 bis 200.000 Dalton aufweist.

5. Verfahren nach einem der vorhergehenden Ansprüche, wobei das erste und/oder zweite Polykondensat ein Uralkyd umfasst, das aus drei- oder höher funktionellen Hydroxy- und/oder Carboxylfunktionskomponenten erhalten wird.

6. Verfahren nach einem der vorhergehenden Ansprüche, wobei das Produkt aus Schritt (d) weniger als 0,1 Gew.-% des Gewichts des gesamten Polykondensatharzes organisches Lösemittel aufweist.

7. Verfahren nach einem der Ansprüche 1 bis 6, wobei die Säuregruppe ausgewählt ist aus der Gruppe bestehend aus sulfonierten Gruppen, phosphonierten Gruppen und Derivaten davon.

8. Verfahren nach einem der Ansprüche 1 bis 6, wobei die Säuregruppe eine aromatische sulfonierte Säuregruppe ist.

9. Verfahren nach einem der Ansprüche 1 bis 6, wobei die Säuregruppe ein aromatisches sulfoniertes Salz ist.

10. Verfahren nach einem der Ansprüche 1 bis 6, wobei die Säuregruppe ein Alkalimetallsulfosalz einer Benzoldicarbonsäure und/oder ein Ester davon ist.

11. Verfahren nach einem der Ansprüche 1 bis 6, wobei die Säuregruppe das Natriumsalz von 5-Sulfoisophthalsäure ist.

12. Verfahren nach einem der Ansprüche 1 bis 6, wobei das Verfahren folgende Schritte umfasst:
1) Umsetzen eines Sulfosalzes einer geeigneten Komponente, ausgewählt aus einer/m oder mehreren Säuren, Alkoholen, Aminen, Säurederivaten davon und/oder Mischungen davon mit einem Überschuss einer geeigneten polyfunktionellen Verbindung, die mit dem Sulfosalz reagieren kann, um einen multifunktionellen Ester zu bilden, praktischerweise einen Diester;
2) Umsetzen des multifunktionellen Esters (praktischerweise ein Diester) aus Schritt (1) mit einer zweiten polyfunktionellen reaktiven Verbindung (die dieselbe oder eine andere als die aus Schritt (1) sein kann, und falls sie dieselbe ist, in zusätzlichen Mengen zu Schritt (1)), und wahlweise Monosäure(n), um einen Polyester zu bilden;
3) Umsetzen des Polyesters aus Schritt 2) mit Fettsäuren, um ein Alkyd zu bilden.

13. Verfahren nach Anspruch 12, wobei das Sulfosalz das Natriumsalz von 5-Sulfoisophthalsäure SSIPA ist.

14. Verfahren nach Anspruch 12 oder Anspruch 13, wobei die Fettsäure in Schritt 3) ausreichend langsam (z.B. tropfenweise)zur Wahrung der Kompatibilität hinzugefügt wird.

15. Verfahren nach einem der Ansprüche 1 bis 6, wobei das Verfahren folgende Schritte umfasst:
1) Umsetzen des Natriumsalzes von 5-Sulfoisophthalsäure (SSIPA) mit einem Überschuss an Neopentylglykol und/oder Trimethylolpropan, um einen Diester zu bilden; und
2) Umsetzen des Diesters aus Schritt (1) mit zusätzlichen Glykolen, Disäuren und Monosäuren - wobei die Monosäuren zur Wahrung der Kompatibilität langsam hinzugefügt werden müssen -, um ein Alkyd auf SSIPA-Basis zu bilden; und
3) Umsetzen des Alkyds auf SSIPA-Basis mit Isocyanat und Diolen in Aceton, um ein Uralkyd zu bilden;
4) Umsetzen des Uralkyds aus Schritt (3) mit einem anderen Alkyd, um ein Produkt zu bilden:
5) Dispergieren des Produkts aus Schritt (4) in Wasser, um eine Dispersion zu bilden;
6) Entfernen der flüchtigen organischen Verbindungen (VOC) aus der Dispersion aus Schritt (5), um eine im Wesentlichen VOC-freie Uralkyddispersion zu erhalten.

16. Wässrige Dispersion eines Polykondensaturalkyds, das durch ein Verfahren nach einem der Ansprüche 1 bis 15 erhältlich ist.

17. Wässrige Beschichtungszusammensetzung, umfassend ein Polykondensaturalkyd, das durch ein Verfahren nach einem der Ansprüche 1 bis 15 erhältlich ist.

18. Gegenstand und/oder Substrat, der/das mit einer Zusammensetzung nach Anspruch 17 beschichtet ist.

19. Verfahren zum Beschichten eines Gegenstandes und/oder Substrats, umfassend die folgenden Schritte
(I) Auftragen einer wässrigen Beschichtungszusammensetzung nach Anspruch 17 auf einen Gegenstand und/oder ein Substrat, und
(II) Trocknen der Beschichtung darauf, um einen beschichteten Gegenstand und/oder ein beschichtetes Substrat zu erhalten.

## Revendications

1. Procédé de dispersion assistée par solvant (SAD) pour la préparation d'une dispersion aqueuse de polycondensat pratiquement sans solvants, ledit polycondensat comprenant un uralkyde, le procédé comprenant les étapes qui consistent à :
(a) faire réagir, en présence d'un solvant non protique, un mélange de :
(i) un ou plusieurs monomères de polycondensat, oligomères de polycondensat et/ou polymères de polycondensat comprenant une pluralité de groupes réagissant avec les isocyanates ; les monomères, oligomères et/ou polymères comprenant 2 à 10 % en poids de constituants (a) (i) formés d'un groupe acide entièrement, partiellement ou non neutralisé ayant une valeur pKa inférieure à 3, et
(ii) au moins un isocyanate multifonctionnel,
pour former un mélange d'une première résine de polycondensat et du solvant non protique ;
(b) optionnellement, faire réagir la première résine de polycondensat obtenue à l'étape (a) avec au moins un monomère, oligomère et/ou polymère différent du constituant (a) pour former une deuxième résine de polycondensat ;
(c) disperser la première résine de polycondensat obtenue à l'étape (a) et/ou la deuxième résine de polycondensat obtenue à l'étape (b) dans un milieu aqueux pour former une dispersion aqueuse de polycondensat ;
(d) éliminer la quasi-totalité du solvant non protique de la dispersion obtenue à l'étape (c) pour former la dispersion aqueuse de polycondensat pratiquement sans solvant
et dans lequel les groupes acides sont entièrement ou partiellement neutralisés à l'étape (a), ou à l'étape (b) ou avant la dispersion du polycondensat dans l'eau, et dans lequel le premier et/ou le deuxième polycondensat comprennent/comprend un uralkyde qui a une masse moléculaire moyenne en poids, mesurée par chromatographie d'exclusion de taille selon la description en utilisant du 1,1,1,3,3,3-hexafluoroisopropanol comme éluent, de 5 000 à 500 000 daltons.

2. Procédé selon la revendication 1, dans lequel le polycondensat est un uralkyde.

3. Procédé selon l'une quelconque des revendications précédentes, dans lequel le premier et/ou le deuxième polycondensat comprennent/comprend un uralkyde qui a une masse moléculaire moyenne en nombre de 1 000 à 200 000 daltons.

4. Procédé selon l'une quelconque des revendications précédentes, dans lequel le premier et/ou le deuxième polycondensat comprennent/comprend un uralkyde qui a une masse moléculaire moyenne en poids de 5 000 à 200 000 daltons.

5. Procédé selon l'une quelconque des revendications précédentes, dans lequel le premier et/ou le deuxième polycondensat comprennent/comprend un uralkyde qui peut être obtenu à partir de constituants fonctionnels hydroxyle et/ou carboxy ayant une fonctionnalité de trois ou plus.

6. Procédé selon l'une quelconque des revendications précédentes, dans lequel le produit obtenu à l'étape (d) contient moins de 0,1 % en poids de solvant organique relativement au poids total de la résine de polycondensat.

7. Procédé selon l'une quelconque des revendications 1 à 6, dans lequel le groupe acide est sélectionné dans le groupe constitué de fractions sulfonées, de fractions phosphonées, et de dérivés de celles-ci.

8. Procédé selon l'une quelconque des revendications 1 à 6, dans lequel le groupe acide est un groupe acide sulfoné aromatique.

9. Procédé selon l'une quelconque des revendications 1 à 6, dans lequel le groupe acide est un sel sulfoné aromatique.

10. Procédé selon l'une quelconque des revendications 1 à 6, dans lequel le groupe acide est un sulfosel de métal alcalin d'un acide benzènedicarboxylique et/ou d'un ester de celui-ci.

11. Procédé selon l'une quelconque des revendications 1 à 6, dans lequel le groupe acide est le sel sodique de l'acide 5-(sulfo)isophtalique.

12. Procédé selon l'une quelconque des revendications 1 à 6, le procédé comprenant les étapes qui consistent à :
1) faire réagir un sulfosel d'un constituant approprié sélectionné parmi un ou plusieurs acides, alcools, amines, dérivés acides de ceux-ci et/ou mélanges de ceux-ci avec un excès d'un composé polyfonctionnel approprié réagissant avec le sulfosel pour former un ester multifonctionnel, commodément un diester ;
2) faire réagir l'ester multifonctionnel (commodément un diester) obtenu à l'étape (1) avec un deuxième composé réactif polyfonctionnel (qui peut être identique à ou différent de celui utilisé à l'étape (1) et si le même est utilisé, dans des quantités en plus de celles de l'étape (1)) et optionnellement, un ou plusieurs monoacides pour former un polyester ;
3) faire réagir le polyester obtenu à l'étape 2) avec des acides gras, pour former un alkyde.

13. Procédé selon la revendication 12, dans lequel le sulfosel est le sel sodique de l'acide 5-(sulfo)isophtalique (SSIPA).

14. Procédé selon la revendication 12 ou la revendication 13, dans lequel à l'étape 3), l'acide gras est ajouté suffisamment lentement (par exemple goutte à goutte) pour maintenir la compatibilité.

15. Procédé selon l'une quelconque des revendications 1 à 6, le procédé comprenant les étapes qui consistent à :
1) faire réagir le sel sodique de l'acide 5-(sulfo)isophtalique (SSIPA) avec un excès de néopentylglycol et/ou de triméthylolpropane pour former un diester ; et
2) faire réagir le diester obtenu à l'étape (1) avec des glycols, diacides et monoacides additionnels, lesdits monoacides devant être ajoutés lentement afin de maintenir la compatibilité, pour former un alkyde à base de SSIPA ; et
3) faire réagir dans de l'acétone l'alkyde à base de SSIPA avec des isocyanates et des diols pour former un uralkyde ;
4) faire réagir l'uralkyde obtenu à l'étape (3) avec un différent alkyde, pour former un produit ;
5) disperser le produit obtenu à l'étape (4) dans de l'eau pour former une dispersion ;
6) éliminer les composés organiques volatils (COV) de la dispersion obtenue à l'étape (5) pour obtenir une dispersion d'uralkyde pratiquement sans COV.

16. Dispersion aqueuse d'un polycondensat uralkyde pouvant être obtenue par un procédé selon l'une quelconque des revendications 1 à 15.

17. Composition aqueuse de revêtement comprenant un polycondensat uralkyde pouvant être obtenu par un procédé selon l'une quelconque des revendications 1 à 15.

18. Article et/ou substrat revêtu d'une composition selon la revendication 17.

19. Procédé de revêtement d'un article et/ou d'un substrat, comprenant les étapes qui consistent à :
(I) appliquer une composition aqueuse de revêtement selon la revendication 17 sur un article et/ou un substrat, et
(II) sécher le revêtement disposé sur l'article et/ou le substrat pour obtenir un article et/ou un substrat revêtu.
